# EUROPEAN PATENT SPECIFICATION

(11) **EP 0 771 525 B1**
(45) Date of publication and mention of the grant of the patent: **11.03.1998**
(21) Application number: 96307659.1
(22) Date of filing: 23.10.1996
(51) Int. Cl.: A01N 25/10, A01N 25/34, A01N 43/80, A01N 47/48

(54) **Solid microbicide formulation**
Feste mikrobizide Formulierung
Formulation microbicide solide

(30) Priority: 30.10.1995 US 8077
(43) Date of publication of application: 07.05.1997
(73) Proprietor: ROHM AND HAAS COMPANY, Philadelphia, Pennsylvania 19106-2399 (US)
(72) Inventor: El A'mma, Beverly Jean, Perkiomenville, Pennsylvania 18074 (US)
(74) Representative: Buckley, Guy Julian

(56) References cited:
- EP-A- 0 106 563
- US-A- 4 086 066

## Description

This invention relates to solid formulations of microbicides and their use in controlling microorganisms.

The use of microbicides to control microorganisms in systems having both a hydrocarbon ("oil") phase and a water phase is well known. The microbicides used commercially in this application are either soluble in the oil phase, the water phase, or both. When an oil soluble microbicide is used in these systems, the microbicide dissolves throughout the oil phase. When a water soluble microbicide is used, it will dissolve throughout the water phase, and when a microbicide is used that is soluble in both, it will partition between both phases.

In oil-water systems, microbial organism growth is heaviest at the oil-water interface. Current commercially used microbicides do not introduce the microbicides at the oil-water interface where they are most needed for control of microorganisms. The effectiveness of the currently used commercial microbicides depends on the slow diffusion of the microbicide from the point of dosing, at either the oil or the water phase, to the oil-water interface. In order to compensate for the slow diffusion of the microbicides to the oil-water interface, either a large amount of microbicide must be used to increase the concentration of the microbicide in a particular phase, and thereby at the interface as well or, alternatively, a longer time is required to achieve control of the microorganisms.

The problem addressed by this invention is how to effectively introduce microbicide at the oil-water interface of storage containers which contain both oil and water phases.

I have discovered a composition in the form of a solid which, when introduced into a container containing separate oil and water phases, resides predominately at the interface of said oil and water phases, said composition comprising one or more microbicides and one or more oil-soluble polymers, said composition having a specific gravity greater than the specific gravity of said oil phase but less than 1.0.

I have also discovered a method of protecting a system containing an oil phase, a water phase, and an interface between said oil phase and said water phase from microbial attack comprising introducing such a solid composition to the interface.

The solid compositions of the invention comprise one or more solid microbicides and one or more oil-soluble polymers, the composition having a specific gravity greater than that of the oil phase to which it is introduced but less than 1.0. The compsitions may optionally contain a stabilizer for the microbicide.

The microbicides useful in this invention are solid and may be either water-soluble or oil-soluble. Suitable microbicides include, for example, 5-chloro-2-methyl-3-isothiazolone ("CMI"), 2-methyl-3-isothiazolone ("MI"), methylene bisthiocyanate, 2-n-octyl-3-isothiazolone, 4,5-dichloro-2-n-octyl-3-isothiazolone, 2-methyl-4,5-trimethylene-3-isothiazolone, and 1,2-benzisothiazolone. Water-soluble microbicides are preferred. Especially preferred are CMI, MI , either alone or in admixture, or methylene bisthiocyanate. When CMI and MI are used in admixture, the preferred ratio of CMI to MI is from 2:98 to 90:10. Especially preferred is a ratio of from 75:25 to 90:10.

The oil-soluble polymers useful in the invention are soluble in conventional hydrocarbon solvents, such as, for example, heptane, cyclohexane, toluene, tetralin, tetrachloromethane, and tetrahydrofuran; and have a high enough glass transition temperature (Tg) such that they do not melt at ambient temperatures. The preferred oil-soluble polymers have a Tg of from 50° to 90° C as determined by differential scanning calorimetry. Preferred molecular weights of the oil-soluble polymers are from 300 to 3000. Suitable oil-soluble polymers include, for example, hydrogenated hydrocarbon polymers. Hydrogenated hydrocarbon polymers, include, for example, aliphatic, aromatic or cyclodiene polymers.

The preferred compositions of the invention comprise one or more solid microbides and one or more oil-soluble polymers in a ratio of from 1:99 to 50:50. Especially preferred are ratios of from 1:99 to 10:90.

The compositions of the invention have a specific gravity which is greater than the specific gravity of said oil phase to which they are introduced but less than 1.0. It is preferred that the compositions have a specific gravity of greater than or equal to 0.75 but less than 1.0. Especially preferred are compositions having a specific gravity of greater than or equal to 0.89 but less than 1.0.

The compositions of the invention may optionally contain a stabilizer for the microbicide. Any stabilizer which stabilizes the microbicide and is compatible with the polymers and the system to be protected may be used. Organic stabilizers are preferred. Examples of suitable organic stabilizers include, for example, diperidinomethane; pyridine; pyridine N-oxide; s-triazine; dimethyl oxime; mercaptobenzothiazole; sodium salt of 2-mercaptopyridine-N-oxide; 2-mercaptopyridine; benzothiazole; alkenes, especially norbornene; trialkyl orthoformates, especially triethyl orthoformate; epoxides; quinones; butylated hydroxytoluene; hexamethylenetetramine; phenylenediamine; dimethylaniline; and bis-dimethylaminonaphthalene. Stabilizers are preferably added in amounts of 0.1 to 12% by weight of the total composition, more 1 to 10% by weight.

The compositions of the invention are prepared by mixing the oil-soluble polymer, microbicide, and optional stabilizer in any order.

It is preferred that the compositions of the invention be formed into a brick, tablet, pellet, granules or briquette. Any of a variety of known methods may be used to form the compositions as a brick, tablet, pellet, granules or briquette.

The term microbicide includes bactericides, fungicides, and algaecides. Microbicidal or biocidal activity is intended to include both the elimination of and inhibition of growth of microorganisms, such as bacteria, fungi, and algae.

The compositions of the invention are useful in any oil-water system subject to contamination by microorganisms. Such systems include, for example, fuel storage tanks, oil storage tanks, oil-soluble metal working fluid storage tanks, printing ink storage tanks, or oil based paint storage tanks.

The compositions of the invention are particularly useful for the preservation of fuel storage tanks of 4,000,000 liters or less.

The amount of microbicide necessary to control microorganisms in a system to be protected is well known. Typically, sufficient amounts of the compositions of the invention are added to the system to be protected to provide from 1 to 100 ppm of microbicide.

It is known in the art that the performance of microbicides may be enhanced by combination with one or more other microbicides. Thus other known microbicides may be combined advantageously with the compositions of this invention.

In the following examples, all percentages are by weight.

### Example 1

A hydrogenated cyclic polymer resin polymerized from a cyclopentadiene monomer (Escorez 5340 brand) was pulverized to a powder. To this was added 10 parts methanol. The microbicide, a 3:1 mixture of 5-chloro-2-methyl-3-isothiazolone and 2-methyl-3-isothiazolone, was melted at 40° C. Dipiperidinomethane as a microbicide stabilizer was added to the melted microbicide mixture. This melted mixture was then charged to the resin/methanol mixture. The mixture was then blended, the methanol stripped under reduced pressure, and the remaining solid material was tabletized. The resultant tablet had the following composition:

| | |
|---|---|
| microbicide | 10 % |
| microbicide stabilizer | 2 % |
| oil-soluble polymer | 88 % |

### Example 2

The procedure of Example 1 was used to prepare the following composition. The microbicide was methylene bisthiocyanate, the oil-soluble polymer was an aliphatic hydrocarbon resin (Escorez 1102 brand), and no microbicide stabilizer was used. The resultant tablet had the following composition:

| | |
|---|---|
| microbicide | 10 % |
| oil-soluble polymer | 90 % |

### Example 3

An amount of British Petroleum diesel fuel #2 Supreme and distilled water were mixed together in a beaker and the two phases allowed to separate. To this was then added the tablet from Example 1. Visual inspection showed the tablet to concentrate at the oil-water interface with slow dissolution and partitioning of the biocide between the oil and water phases.

### Example 4

The tablet from Example 1 was evaluated for biological efficacy in a contaminated simulated water bottom from a fuel storage tank, prepared as follows:

### Mixed Fuel Inoculum Preparation and Maintenance

Three hydrocarbon utilizing microorganisms, *Cladosporium resinae,* ATCC 22712, *Candida lipolytica,* ATCC 16617, and *Pseudomonas aeruginosa,* ATCC 33988, were maintained separately in Bushnell Haas medium, under British Petroleum ("BP") #2 diesel fuel Supreme. Separate cell suspensions of the hydrocarbon utilizing microorganisms were prepared by homogenizing growth from the fuel/water bottom interface with 5 ml of sterile Bushnell Haas medium in a sterile tissue grinder. Each of the cell suspensions was added to 100 ml of Bushnell Haas medium under 100 ml of fuel in a sterile glass jar. This contaminated system was stored at ambient temperature. These test microorganisms were allowed to grow for at least one week to give them a chance to break down the fuel hydrocarbons to simple, hydrocarbon substrates (to be used by the other test organisms as a carbon source).

Six non-hydrocarbon utilizing microorganisms, *Escherichia coli,* ATCC 11229, *Enterobacter aerogenes,* ATCC 13048, *Proteus mirabilis,* ATCC 4675, *Pseudomonas oleoverans,* ATCC 8062, *Citrobacter freundii,* ATCC6750, and *Candida albicans,* ATCC 11651, were grown on trypticase soy broth agar slants for 48 hours at 30° C. A 100 µl loop of each miroorganism was suspended in separate 5 ml aliquots of Bushnell Haas medium. The cell suspensions were then added to the one week aged inoculum containing *Cladosporium resinae, Candida lipolytica,* and *Pseudomonas aeruginosa* in Bushnell Haas medium under fuel.

The completed mixed inoculum was stored at ambient temperature. Only the contaminated Bushnell Haas portion (not the fuel) was used to prepare the simulated water bottom.

### Contaminated Simulated Water Bottom Preparation

The contaminated simulated water bottom was prepared by blending together (at high speed for one minute) the mixed fuel inoculum prepared above (70% of the total volume) and freshly prepared cell suspensions in Bushnell Haas medium of *Cladosporium resinae, Candida lipolytica,* and *Pseudomonas aeruginosa* (10% of the total volume of each cell suspension). The cell suspensions were prepared as listed above for the mixed fuel inoculum. The level of contamination was approximately 10⁹ colony forming units ("CFU")/ml.

### Test Procedure

Two glass, sterile separatory funnels were set up in a holder. BP #2 diesel fuel Supreme (999 ml) was added to each separatory funnel one day prior to time zero. At time zero, the contaminated simulated water bottom was prepared and 1 ml was added by sterile pipet to the bottom of each separatory funnel under the fuel componet. The final fuel:water bottom ratio was 1000:1.

One of the separatory funnels received no microbicide treatment and served as a control. The other separatory funnel was treated with the tablet from Example 1 (Invention). Sufficient tablet was added to give a concentration of 3 ppm of microbicide.

The water bottoms were analyzed for number of surviving organisms via agar plating at 0, 24, 48 and 72 hours after treatment. Each water bottom was aseptically removed, mixed thoroughly, plated and returned to the separatory funnel at each sampling time. Serial dilutions of each water bottom, prepared in a microtiter plate in sterile phosphate buffer (pH 7.2 ± 0.2), were plated on three different agar media. Trypticase soy broth agar was used to determine the total number of contaminating organisms, both bacteria and fungi. MacConkey's agar was used to determine the bacterial contamination in the presence of the fungi. Potato dextrose agar with tartaric acid was used to determine the level of fungal contamination in the presence of the bacteria. The agar plates were incubated at 30° C for 7 days and were then checked for the number of viable colony forming units per ml of water bottom (CFU/ml) present. The total numbers of organisms recovered in these tests are reported in Table 1.

**Table 1**

| Sample | Organisms | Total Numbers of Living Organisms in CFU/ml | | | |
|---|---|---|---|---|---|
| | | 0 Hour | 24 Hours | 48 Hours | 72 Hours |
| Control | Bacteria | 1.8 x 10¹⁰ | 1.8 x 10¹¹ | 1.6 x 10⁹ | 2.5 x 10⁹ |
| Invention | " | 1.8 x 10¹⁰ | 1.6 x 10⁸ | <56 | <56 |
| Control | Fungi | 5.6 x 10⁷ | 1.1 x 10⁶ | 3.9 x 10⁶ | 6.1 x 10⁶ |
| Invention | " | 5.6 x 10⁷ | 3.2 x 10³ | 6 x 10¹ | <56 |
| Control | Bacteria + Fungi | 9.5 x 10⁹ | 2.9 x 10⁸ | 6.9 x 10⁸ | 1.1 x 10⁹ |
| Invention | " | 9.5 x 10⁹ | 4.9 x 10⁵ | 3.1 x 10⁴ | 4.2 x 10² |

A viable count of 10³ CFU/ml or more of microorganisms was considered significant microbial contamination. It can be seen from the above data that the compositions of the invention are effective in controlling the growth of microorganisms.

## Claims

1. Composition in the form of a solid which, when introduced into a container containing separate oil and water phases, resides predominately at the interface of said oil and water phases, said composition comprising one or more microbicides and one or more oil-soluble polymers, said composition having a specific gravity greater than the specific gravity of said oil phase but less than 1.0.

2. Composition according to claim 1 wherein said oil-soluble polymers have a glass transition temperature of from 50° to 90° C.

3. Composition according to claim 1 wherein the ratio of said microbicides to said oil-soluble polymers is from 1:99 to 50:50.

4. Composition according to claim 1 wherein said composition has a specific gravity of greater than or equal to 0.75 but less than 1.0.

5. Composition according to claim 1 wherein said oil-soluble polymers are hydrogenated hydrocarbon polymers.

6. Composition according to claim 1 wherein said microbicides are selected from the group consisting of 5-chloro-2-methyl-3-isothiazolone, 2-methyl-3-isothiazolone, methylene bisthiocyanate, 2-n-octyl-3-isothiazolone, 4,5-dichloro-2-n-octyl-3-isothiazolone, 2-methyl-4,5-trimethylene-3-isothiazolone, and 1,2-benzisothiazolone.

7. Composition according to claim 1 further comprising a stabilizer for said microbicides.

8. Method of protecting a system containing an oil phase, a water phase, and an interface between said oil phase and said water phase from microbial attack comprising introducing a solid composition according to claim 1 to said interface.

9. Method according to claim 8 wherein said oil phase and said water phase are present in a fuel storage tank, oil storage tank, oil-soluble metal working fluid storage tank, printing ink storage tank, or oil based paint storage tank.

## Patentansprüche

1. Zusammensetzung in Form eines Feststoffes, der, wenn er sich in einem Behälter, der getrennte Öl- und Wasserphasen enthält, hauptsächlich an der Grenzfläche der Öl- und Wasserphasen aufhält, wobei die Zusammensetzung ein oder mehrere Mikrobicide und ein oder mehrere öllösliche Polymere enthält und die Zusammensetzung eine spezifische Dichte aufweist, die größer als die spezifische Dichte der Ölphase, jedoch kleiner als 1,0 ist.

2. Zusammensetzung nach Anspruch 1, dadurch gekennzeichnet, daß die öllöslichen Polieren eine Glasübergangstemperatur von 50°C bis 90°C aufweisen.

3. Zusammensetzung nach Anspruch 1, dadurch gekennzeichnet, daß das Verhältnis von Mikrobiciden:öllöslichen Polieren von 1:99 bis 50:50 beträgt.

4. Zusammensetzung nach Anspruch 1, dadurch gekennzeichnet, daß die Zusammensetzung eine spezifische Dichte von größer oder gleich 0,75, jedoch kleiner als 1,0 aufweist.

5. Zusammensetzung nach Anspruch 1, dadurch gekennzeichnet, daß die öllöslichen Polymeren hydrogenierte Kohlenwasserstoffpolymere sind.

6. Zusammensetzung nach Anspruch 1, dadurch gekennzeichnet, daß die Mikrobicide ausgewählt sind aus der Gruppe, bestehend aus 5-Chlor-2-methyl-3-isothiazolon, 2-Methyl-3-isothiazolon, Methylen-Bisthiocyanat, 2-n-Octyl-3-isothiazolon, 4,5-Dichlor-2-n-octyl-3-isothiazolon, 2-Methyl-4,5-trimethylen-3-isothiazolon und 1,2-Benzisothiazolon.

7. Zusammensetzung nach Anspruch 1, dadurch gekennzeichnet, daß sie weiterhin einen Stabilisator für die Mikrobicide enthält.

8. Verfahren zum Schützen eines Systems, das eine Ölphase, eine Wasserphase und eine Grenzschicht zwischen der Ölphase und der Wasserphase aufweist, gegenüber mikrobiologischem Angriff durch Einbringen einer festen Zusammensetzung nach Anspruch 1 in die Grenzfläche.

9. Verfahren nach Anspruch 8, dadurch gekennzeichnet, daß die Ölphase und die Wasserphase anwesend sind in einem Brennstofflagertank, einem Öllagertank, einem Lagertank für öllösliche Metallbearbeitungsflüssigkeiten, einem Lagertank für Druckfarben oder einem Lagertank für auf Öl basierende Farben.

## Revendications

1. Composition sous la forme d'un solide qui, lorsqu'elle est introduite dans un récipient contenant des phases huileuses et aqueuses séparées, se place principalement à l'interface desdites phases huileuses et aqueuses, ladite composition comprenant un ou plusieurs microbicides et un ou plusieurs polymères oléosolubles, ladite composition ayant une densité supérieure à celle de ladite phase huileuse mais inférieure à 1,0.

2. Composition selon la revendication 1, dans laquelle lesdits polymères oléosolubles ont une température de transition vitreuse de 50 à 90°C.

3. Composition selon la revendication 1, dans laquelle le rapport desdits microbicides aux dits polymères oléosolubles est de 1:99 à 50:50.

4. Composition selon la revendication 1, ladite composition ayant une densité supérieure ou égale à 0,75 mais inférieure à 1,0.

5. Composition selon la revendication 1, dans laquelle lesdits polymères oléosolubles sont des polymères d'hydrocarbures hydrogénés.

6. Composition selon la revendication 1, dans laquelle lesdits microbicides sont choisis dans le groupe constitué par la 5-chloro-2-méthyl-3-isothiazolone, la 2-méthyl-3-isothiazolone, le bisthiocyanate de méthylène, la 2-n-octyl-3-isothiazolone, la 4,5-dichloro-2-n-octyl-3-isothiazolone, la 2-méthyl-4,5-triméthylène-3-isothiazolone, et la 1,2-benzisothiazolone.

7. Composition selon la revendication 1, comprenant en outre un stabilisant desdits microbicides.

8. Procédé de protection d'un système contenant une phase huileuse, une phase aqueuse et une interface entre ladite phase huileuse et ladite phase aqueuse contre l'attaque microbienne, comprenant l'introduction d'une composition solide selon la revendication 1 dans ladite interface.

9. Procédé selon la revendication 8, dans lequel ladite phase huileuse et ladite phase aqueuse sont présentes dans un réservoir de stockage de combustible, dans un réservoir de stockage d'huile, dans un réservoir de stockage de fluide de transformation des métaux oléosoluble, dans un réservoir de stockage d'encre d'imprimerie, ou dans un réservoir de stockage de peinture à l'huile.
